# EUROPÄISCHE PATENTSCHRIFT

(11) **EP 1 291 560 B1**
(45) Veröffentlichungstag und Bekanntmachung des Hinweises auf die Patenterteilung: **25.05.2005**
(21) Anmeldenummer: 02019276.1
(22) Anmeldetag: 28.08.2002
(51) Int. Cl.: F16H 63/30, F16H 63/32

(54) **Hilfskraftunterstützte Getriebeschaltvorrichtung**
Power assisted gear shift device
Dispositif de changement de rapports à commande assistée

(30) Priorität: 07.09.2001 DE 10143885
(43) Veröffentlichungstag der Anmeldung: 12.03.2003
(73) Patentinhaber: Bayerische Motoren Werke Aktiengesellschaft, 80809 München (DE)
(72) Erfinder: Körber, Martin, 85375 Neufahrn (DE)

(56) Entgegenhaltungen:
- EP-A- 0 731 298
- GB-A- 1 268 847
- US-A- 2 510 697
- US-A- 4 998 443

## Beschreibung

Die vorliegende Erfindung betrifft eine Getriebeschaltvorrichtung gemäß dem Oberbegriff des Patentanspruches 1.

Eine derartige Getriebeschaltvorrichtung ist aus der US 2 510 697 bekannt.

Aus der DE 39 39 274 C1 ist ein Getriebe bekannt, bei dem ein erstes und ein zweites schaltbares Zahnrad drehbar auf einer Eingangswelle gelagert sind. Zwischen den beiden Zahnrädern ist eine Festmuffe angeordnet, die drehfest mit der Eingangswelle verbunden ist. Auf der Festmuffe ist axial verschieblich eine Schiebemuffe angeordnet, die drei Schaltstellungen einnehmen kann, nämlich eine Mittel- bzw. Neutralstellung sowie eine erste bzw. zweite Schaltstellung, in der das erste bzw. zweite Zahnrad über die Schiebemuffe und die Festmuffe drehfest mit der Welle verbunden ist. Zur Betätigung der Schiebemuffe ist an ihrem Außenumfang eine Nut vorgesehen, in die eine "Verschiebeeinrichtung", das heißt eine mit einer Schaltstange verbundene Schaltgabel eingreift, welche vom Fahrer über einen Schalthebel bedienbar ist.

In Wechselgetrieben ohne Planetenradsätzen werden, wie es beispielsweise in der oben genannten DE 39 39 274 C1 erläutert ist, ein Gang geschaltet, in dem eine formschlüssige Verbindung zwischen einem Zahnrad und der zugeordneten Welle hergestellt wird. Ist die Verbindung zwischen dem Zahnrad und der Welle geschlossen, so kann über diesen "Pfad" ein Drehmoment übertragen werden. Ein derartiges "Verbindungselement" weist ein Innenteil bzw. eine Festmuffe auf, mit einer Außenverzahnung mit in Achsrichtung angeordneten Zähnen, sowie ein axial verschiebliches Außenteil bzw. eine Schiebemuffe mit einer Innenverzahnung mit ebenfalls in Achsrichtung ausgerichteten Zähnen. Das Innenteil und das Außenteil sind stets in Eingriff. Durch axiales Verschieben der Schiebemuffe kann ein Zahnrad zugeschaltet werden, das heißt in Drehrichtung formschlüssig über die Festmuffe mit der Welle verbunden werden.

Bei der Auslenkung aus der Neutralstellung wird die Schiebemuffe so weit in axialer Richtung bewegt, dass sie einerseits immer noch mit der Festmuffe in Eingriff steht, andererseits aber auch mit ihrer Innenverzahnung in die zugeordnete Verzahnung des "anzukoppelnden" Bauteils eintaucht.

Die Auslenkung der Schiebemuffe aus ihrer Mittel- bzw. Neutralstellung erfolgt beispielsweise mittels einer sogenannten "Schaltschwinge". Eine Schaltschwinge führt eine Schwenkbewegung um eine Achse aus, die senkrecht zur Längsachse der Schiebemuffe ist, die aber die Längsachse nicht schneidet. Die Schaltschwinge weist beweglich angeordnete Gleitsteine auf, die in eine am Außenumfang der Schiebemuffe umlaufende Ringnut eingreifen und die bei einer Kipp- bzw. Schwenkbewegung der Schaltschwinge die Schiebemuffe in axialer Richtung verschieben.

Alternativ zu einer Schaltschwinge kann zur Betätigung der Schiebemuffe auch eine sogenannte "Schaltgabel" vorgesehen sein. Die Schaltgabel sitzt formschlüssig auf einer zu ihrer Lagerung und Führung dienenden Schaltstange. Die Schaltgabel greift in die am Außenumfang der Schiebemuffe umlaufende Ringnut ein, was bei einer axialen Verschiebung zu einer "Mitnahme" der Schiebemuffe führt.

Eine axial verschiebbare Welle mit einem formschlüssig darauf sitzenden Mitnahmefinger, die als sogenannte "Schaltwelle" bezeichnet wird, lenkt üblicherweise die Schaltschwinge bzw. die Schaltstange mit ihrer Schaltgabel aus der Neutralposition aus.

Aus anmelderinternem Stand der Technik ist ein automatisiertes Schaltgetriebe bekannt, das auf einem herkömmlichen Schaltgetriebe aufsetzt, wobei mittels hydraulischer Aktuatoren die Schaltwelle einerseits axial verschiebbar und andererseits zur Wahl der Schaltgasse verdrehbar ist.

Aufgabe der Erfindung ist es, eine Schaltvorrichtung zu schaffen, die eine kompakte Bauweise und eine erweiterte Funktionalität aufweist.

Diese Aufgabe wird durch die Merkmale des Patentanspruches 1 gelöst. Vorteilhafte Ausgestaltungen und Weiterbildungen der Erfindung sind den Unteransprüchen zu entnehmen.

Das Grundprinzip der Erfindung besteht in einer Getriebeschaltvorrichtung mit einer durch einen Aktuator betätigbaren "Verschiebeeinrichtung" zum axialen Verschieben einer Schiebemuffe, wobei der Aktuator bzw. der Aktuatorkolben über ein Zwischenelement und zwei Gelenke mit der Verschiebeeinrichtung verbunden ist. Eine derartige "gelenkige Verbindung" zwischen dem Aktuator und der "Verschiebeeinrichtung" ermöglicht eine größere "Freiheit" hinsichtlich der räumlichen Anordnung des Aktuators und somit eine sehr kompakte Bauweise.

Bei einem Kfz-Getriebe liegen üblicherweise mehrere Schaltgassen nebeneinander, denen jeweils eine Schaltschwinge bzw. eine Schaltstange mit einer Schaltgabel zugeordnet sind. Vorzugsweise ist jeder Schaltgasse ein eigener Aktuator zugeordnet, was eine separate Ansteuerung der Schaltschwingen bzw. Schaltstangen und Schaltgabeln der einzelnen Schaltgassen ermöglicht. Dies hat den Vorteil, dass in bestimmten Betriebssituationen mehr als nur ein Gang gleichzeitig "ansynchronisierbar" ist. Ein weiterer Vorteil besteht darin, dass mehrere Gänge ohne unakzeptabel lange Schaltzeiten problemlos übersprungen werden können. Femer kann das Auslegen eines Ganges und das Einlegen eines anderen Ganges zeitlich überlappend erfolgen, was kürzere Schaltzeiten ermöglicht.

In modernen Fahrzeuggetrieben stellt jedoch der Einbau mehrerer Aktuatoren häufig ein Bauraumproblem dar. Die Schaltstangen der einzelnen Schaltgassen liegen meist sehr nahe nebeneinander bzw. der Abstand der Schaltschwingen zueinander reicht nicht für den Einbau eines Aktuators aus. Durch die oben erläuterte gelenkige Verbindung der Aktuatoren mit ihrer zugeordneten "Verschiebeeinrichtung" wird das Bauraumproblem gelöst. Aufgrund der gelenkigen Verbindung brauchen die Aktuatoren nämlich nicht koaxial zu den einzelnen Schaltgassen angeordnet sein. Somit können problemlos mehrere Aktuatoren nebeneinanderliegend angeordnet sein.

Die gelenkige Verbindung ermöglicht verschiedene Aktuatoranordnungen mit zwei Gelenken und einem Zwischenelement kann der Aktuator parallel versetzt zur Schaltgasse angeordnet sein.

Im folgenden wird die Erfindung anhand von Ausführungsbeispielen im Zusammenhang mit der Zeichnung näher erläutert. Es zeigen:
- Figuren 1 - 4: eine Getriebeschaltvorrichtung mit einer Schaltschwinge;
- Figuren 5 - 8: eine Getriebeschaltvorrichtung mit einer Schaltgabel und einer Schaltstange;
- Figur 9: eine erfindungsgemäße Getriebeschaltvorrichtung mit zwei Gelenken und einem Zwischenelement; und
- Figur 10: eine nicht beanspruchte Getriebeschaltvorrichtung mit einem Gelenk.

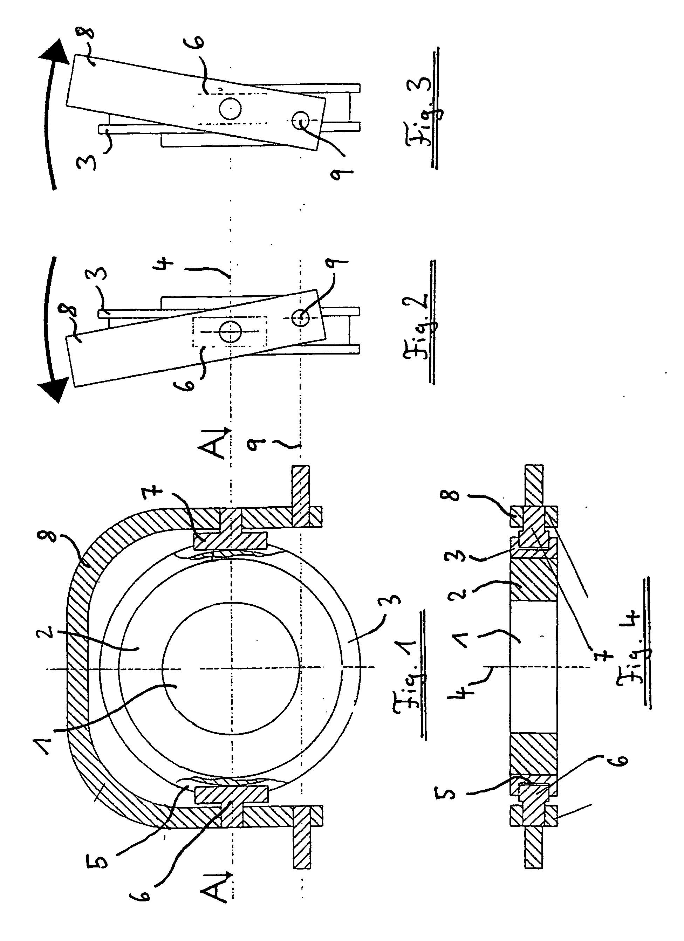

Die **Figuren 1 - 4** zeigt eine Getriebeschaltvorrichtung, bei der auf einer Welle 1 drehfest eine Festmuffe 2 angeordnet ist. Eine Schiebemuffe 3 ist drehfest und axial verschieblich auf der Festmuffe 2 angeordnet. Die Schiebemuffe 3 ist entlang einer Dreh- bzw. Längsachse 4 verschieblich. Am Außenumfang der Schiebemuffe 3 ist eine umlaufende Nut 5 vorgesehen. Auf einander gegenüberliegenden Seiten der Schiebmuffe 3 sind Gleitsteine 6, 7 vorgesehen, die in die umlaufende Nut 5 eingreifen. Die Gleitsteine 6, 7 sind in einer U-förmigen Schaltschwinge 8 gelagert, die um eine Schwenkachse 9 schwenkbar ist.

Aus den **Figuren 2 und 3** ist ersichtlich, dass durch Verschwenken der Schaltschwinge 8 in eine linke bzw. rechte Schwenkstellung die Schiebemuffe 3 durch die Gleitsteine 6, 7 axial verschoben wird. Durch axiales Verschieben der Schiebemuffe 3 kann diese mit einem hier nicht dargestellten Zahnrad in Eingriff gebracht werden und dieses dadurch drehfest mit der Festmuffe 2 bzw. der Welle 1 verbunden werden.

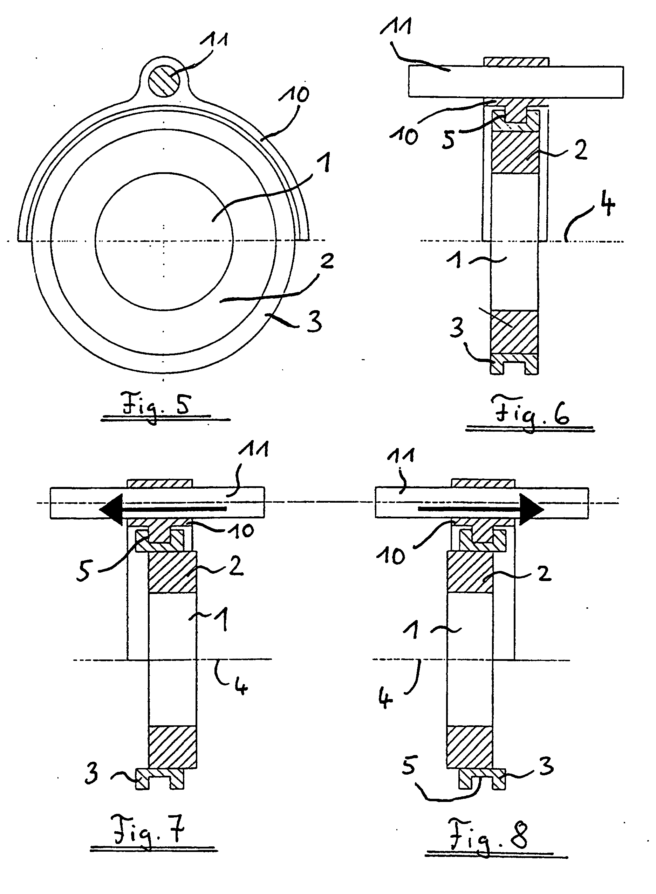

Die **Figuren 5 - 8** zeigen eine Getriebeschaltvorrichtung mit einer Schaltgabel und einer Schaltstange.

Entsprechend den **Figuren 1 - 4** ist mit der Welle 1 drehfest die Festmuffe 2 verbunden. Auf der Festmuffe 2 ist axial verschieblich die Schiebemuffe 3 angeordnet, die stets in Dreheingriff mit der Festmuffe 2 steht. In die am Außenumfang umlaufende Nut 5 der Schiebemuffe 3 greift hier eine Schaltgabel 10 ein, die entlang der Längsachse 4 verschieblich ist. Zum axialen Verschieben der Schaltgabel 10 ist eine Schaltstange 11 vorgesehen, die fest mit der Schaltgabel 10 verbunden ist. Durch axiales Verschieben kann zwischen einem hier nicht dargestellten Zahnrad und der Festmuffe 2 bzw. der Welle 1 über die Schiebemuffe 3 eine drehfeste Verbindung hergestellt werden.

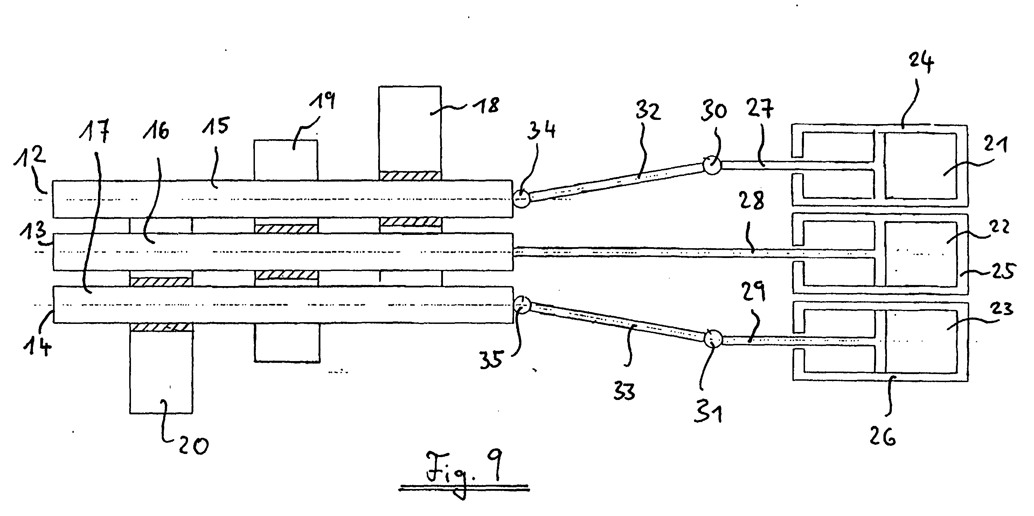

**Figur 9** zeigt eine Getriebeschaltvorrichtung mit drei Schaltgassen 12, 13, bzw. 14. Jeder der Schaltgassen 12 - 14 ist eine Schaltstange 15 - 17 zugeordnet. Die Schaltstangen 15 - 17 betätigen jeweils eine zugeordnete Schaltgabel 18-20. Über die Schaltgabeln 18-20 können zugeordnete Schiebemuffen betätigt und hier nicht dargestellte Zahnräder der einzelnen Schaltgassen 12 - 14 geschaltet werden.

Die Schaltstangen 15 - 17 sind hier jeweils durch einen separaten Aktuator 21 bzw. 23 betätigbar. Die Aktuatoren bestehen jeweils aus einem Hydraulikzylinder 24 - 26 und einem Hydraulikkolben 27 - 29, der axial dazu verschiebbar ist.

Der "mittlere Aktuator" 22 ist koaxial zur mittleren Schaltgasse 13 angeordnet, wobei der Hydraulikkolben 28 hier unmittelbar, d.h. "starr" mit der zugeordneten Schaltstange 16 verbunden ist. Die beiden äußeren Aktuatoren 21, 23 hingegen sind parallel versetzt bezüglich der Schaltgasse 12 bzw. 14 angeordnet. Zum Ausgleich des axialen Versatzes der Hydraulikkolben 27 bzw. 29 bezüglich der Schaltstangen 15 bzw. 17 ist eine gelenkige Verbindung vorgesehen. Die Hydraulikkolben 27 bzw. 29 sind hierzu jeweils über ein erstes Gelenk 30 bzw. 31 mit einem zugeordneten Zwischenelement 32 bzw. 33, das hier jeweils eine einfache Stange ist, verbunden. Das Zwischenelement 32 bzw. 33 ist über ein zugeordnetes zweites Gelenk 34, 35 mit der Schaltstange 15 bzw. 17 verbunden.

Aufgrund der gelenkigen Verbindung der Aktuatoren 21 bzw. 23 mit den Schaltstangen 15 - 17 können die Aktuatoren 21 - 23 praktisch unabhängig vom Abstand der Schaltgassen 12 - 14 nebeneinander angeordnet werden, wodurch eine sehr kompakte Bauweise erreicht wird.

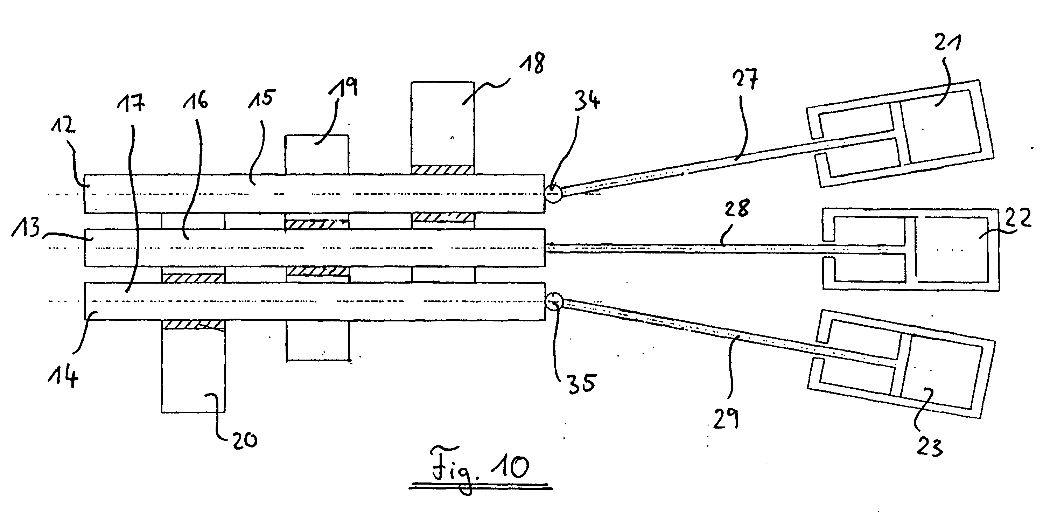

Figur 10 zeigt eine nicht beanspruchte Variante. Analog zu dem Ausführungsbeispiel der Figur 9 sind auch hier drei Schaltgassen 12 - 14 vorgesehen, denen jeweils eine Schaltstange 15 - 17 sowie eine Schaltgabel 18 - 20 zugeordnet sind.

Die mittlere Schaltgabel 16 ist durch den koaxial dazu angeordneten Aktuator 22 betätigbar, wobei entsprechend Figur 9 der Hydraulikkolben 28 starr mit der Schaltgabel 16 verbunden ist.

Die beiden äußeren Aktuatoren 21 und 23 sind im Unterschied zu **Figur 9** schräg bezüglich der Schaltgassen 12 - 14 angeordnet. Ferner sind hier die zugeordneten Hydraulikkolben 27 bzw. 29 jeweils nur über ein Gelenk 34 bzw. 35 mit ihrer zugeordneten Schaltgabel 15, 17 verbunden.

## Patentansprüche

1. Getriebeschaltvorrichtung mit
einer Festmuffe, die drehfest mit einer Welle verbundenen ist, einer Schiebemuffe, die drehfest und entlang ihrer Längsachse axial verschieblich auf der Festmuffe angeordnet ist und
einer Verschiebeeinrichtung, zum axialen Verschieben der Schiebemuffe und
einem Aktuator, zum Betätigen der Verschiebeeinrichtung, wobei der Aktuator (21-23) über mindestens ein Gelenk (30, 31; 34, 35) mit der Verschiebeeinrichtung (15 - 20) verbunden ist
**dadurch gekennzeichnet, dass**
dass der Aktuator (21, 23) über ein erstes Gelenk (30, 31) mit einem schräg zur Längsachse (4) angeordneten Zwischenelement (32, 33) verbunden ist und dass das Zwischenelement (32, 33) über ein zweites Gelenk (34, 35) mit der Verschiebeeinrichtung (15-20) verbunden ist.

2. Getriebeschaltvorrichtung nach Anspruch 1, **dadurch gekennzeichnet, dass** der Aktuator (21-23) einen längsverschieblichen Aktuatorkolben (27-29) aufweist.

3. Getriebeschaltvorrichtung nach Anspruch 1 oder 2, **dadurch gekennzeichnet, dass** der Aktuator (21, 23) parallel versetzt zur Längsachse (4) der Schiebemuffe (18-20) angeordnet ist.

4. Getriebeschaltvorrichtung nach einem der Ansprüche 1 bis 3, **dadurch gekennzeichnet, dass** drei Schaltgassen (12-14) vorgesehen sind, denen jeweils eine Festmuffe (2), eine Schiebemuffe (3), eine Verschiebeeinrichtung (15-20) und ein Aktuator (21-23) zugeordnet sind.

5. Getriebeschaltvorrichtung nach Anspruch 4, **dadurch gekennzeichnet, dass** die Aktuatoren (21-23) der drei Schaltgassen (12-14) nebeneinander angeordnet sind.

6. Getriebeschaltvorrichtung nach Anspruch 4 oder 5, **dadurch gekennzeichnet, dass** die beiden äußeren Aktuatoren (21, 23) schräg zu den Längsachsen (4) der zugeordneten Schiebemuffen (3) angeordnet sind und dass der mittlere Aktuator (22) koaxial zur Längsachse seiner zugeordneten Schiebemuffe (4) angeordnet ist und starr mit seiner zugeordneten Verschiebeeinrichtung (16, 19) verbunden ist.

7. Getriebeschaltvorrichtung nach einem der Ansprüche 4 oder 5, **dadurch gekennzeichnet, dass** Aktuatoren (21-23) parallel zueinander angeordnet sind, wobei die beiden äußeren Aktuatoren (21, 23) parallel versetzt zur Längsachse der jeweils zugeordneten Schaltgasse (12, 14) angeordnet sind und der mittlere Aktuators (22) koaxial zur zugeordneten mittleren Schaltgasse (13) angeordnet ist.

8. Getriebeschaltvorrichtung nach einem der Ansprüche 1 bis 7, **dadurch gekennzeichnet, dass** der Aktuator (21-23) ein elektrisch ansteuerbarer Hydraulikkolben ist.

9. Getriebeschaltvorrichtung nach einem der Ansprüche 1 bis 8, **dadurch gekennzeichnet, dass** am Außenumfang der Schiebemuffe (3) eine Nut (5) vorgesehen ist, in die die Verschiebeeinrichtung (15-20) eingreift.

10. Getriebeschaltvorrichtung nach Anspruch 9, **dadurch gekennzeichnet, dass** die Verschiebeeinrichtung (15-20) durch eine Schaltgabel (18-20) und eine damit verbundene Schaltstange (15-17) gebildet ist, wobei die Schaltgabel (18-20) in die Nut (5) eingreift.

11. Getriebeschaltvorrichtung nach Anspruch 9, **dadurch gekennzeichnet, dass** die Verschiebeeinrichtung durch eine Schaltschwinge (8) und damit gelenkig verbundene Gleitsteine (6, 7) gebildet ist, die in die Nut (5) eingreifen.

## Claims

1. A gearshift device comprising
a fixed coupling co-rotatably connected to a shaft; a sliding coupling disposed on the fixed coupling so as to be co-rotatable and axially movable along its longitudinal axis; and a shift device for axially shifting the sliding coupling, and
an actuator for operating the shift device, wherein the actuator (21 - 23) is connected to the shift device (15 -20) by at least one joint (30, 31; 34, 35),
**characterised in that**
the actuator (21, 23) is connected by a first joint (30, 31) to an intermediate element (32, 33) disposed at an angle to the longitudinal axis (4), and the intermediate element (32, 33) is connected by a second joint (34, 35) to the shift device (15 - 20).

2. A gearshift device according to claim 1, **characterised in that** the actuator (21 - 23) comprises a longitudinally movable actuator piston (27 - 29).

3. A gearshift device according to claim 1 or 2, **characterised in that** the actuator (21, 23) is disposed parallel with and offset from the longitudinal axis (4) of the sliding coupling (18 - 20).

4. A gearshift device according to any of claims 1 to 3, **characterised in that** three gearshift lanes (12 - 14) are provided, each being associated with a fixed coupling (2), a sliding coupling (3), a shift device (15 - 20) and an actuator (21 - 23).

5. A gearshift device according to claim 4, **characterised in that** the actuators (21 - 23) of the three gearshift lanes (12 - 14) are disposed side by side.

6. A gearshift device according to claim 4 or 5, **characterised in that** the two outer actuators (21, 23) are disposed at an angle to the longitudinal axes (4) of the associated sliding couplings (3) and the middle actuator (22) is disposed coaxially with the longitudinal axis of its associated sliding coupling (4) and is rigidly connected to the associated shift device (16, 19).

7. A gearshift device according to claim 4 or 5, **characterised in that** actuators (21 - 23) are disposed parallel with one another, wherein the two outer actuators (21, 23) are disposed parallel with and offset from the longitudinal axis of the associated gearshift lane (12, 14) and the middle actuator (22) is disposed coaxially with the associated middle gearshift lane (13).

8. A gearshift device according to any of claims 1 to 7, **characterised in that** the actuator (21 - 23) is an electrically actuated hydraulic piston.

9. A gearshift device according to any of claims 1 to 8, **characterised in that** a groove (5) in which the shift device (15 - 20) engages is provided on the outer periphery of the sliding coupling (3).

10. A gearshift device according to claim 9, **characterised in that** the shift device (15 - 20) is in the form of a selector fork (18 - 20) and a selector rod (15 - 17) connected thereto, wherein the selector fork (18 - 20) engages in the groove (5).

11. A gearshift device according to claim 9, **characterised in that** the shift device is in the form of a shift rocker arm (8) and sliding blocks (6, 7) pivotably connected thereto and engaging in the groove (5).

## Revendications

1. °) Dispositif de changement de vitesse comportant
- un manchon fixe solidaire en rotation avec un arbre,
- un manchon coulissant, solidaire en rotation sur le manchon fixe et mobile axialement le long de son axe longitudinal,
- une installation de déplacement pour déplacer axialement le manchon coulissant, et
- un actionneur pour actionner l'installation de déplacement, l'actionneur (21 à 23) étant relié à l'installation de déplacement (15 à 20) par l'intermédiaire d'au moins une articulation (30, 31 : 34, 35),
**caractérisé en ce que**
l'actionneur (21, 23) est relié par l'intermédiaire d'une première articulation (30, 31) à un élément intermédiaire (32, 33) disposé obliquement par rapport à l'axe longitudinal (4), et
l'élément intermédiaire (32, 33) est relié à l'installation de déplacement (15 à 20) par l'intermédiaire d'une deuxième articulation (34, 35).

2. Dispositif de changement de vitesse selon la revendication 1,
**caractérisé en ce que**
l'actionneur (21 à 23) présente un piston d'actionnement (27 à 29) mobile longitudinalement.

3. Dispositif de changement de vitesse selon la revendication 1 ou 2,
**caractérisé en ce que**
l'actionneur (21 à 23) est décalé parallèlement par rapport à l'axe longitudinal (4) du manchon coulissant (18 à 20).

4. Dispositif de changement de vitesse selon l'une des revendications 1 à 3,
**caractérisé en ce que**
on prévoit trois voies de commande (12 à 14) à chacune desquelles est associé un manchon fixe (2), un manchon coulissant (3), une installation de déplacement (15 à 20) et un actionneur (21 à 23).

5. Dispositif de changement de vitesse selon la revendication 4, **caractérisé en ce que**
les actionneurs (21 à 23) des trois voies de commande (12 à 14) sont disposés les uns à côté des autres.

6. Dispositif de changement de vitesse selon la revendication 4 ou 5,
**caractérisé en ce que**
les deux actionneurs (21, 23) extérieurs sont disposés obliquement par rapport aux axes longitudinaux (4) des manchons coulissants (3) associés, et
l'actionneur (22) central est coaxial à l'axe longitudinal de son manchon coulissant (4) associé et est relié rigidement à son installation de déplacement (16, 19) associée.

7. Dispositif de changement de vitesse selon l'une des revendications 4 ou 5,
**caractérisé en ce que**
des actionneurs (21 à 23) sont parallèles les uns aux autres, les deux actionneurs (21, 23) extérieurs étant décalés parallèlement à l'axe longitudinal de la voie de commande (12, 14) respectivement associée et l'actionneur (22) central est coaxial à la voie de commande (13) centrale associée.

8. Dispositif de changement de vitesse selon l'une des revendications 1 à 7,
**caractérisé en ce que**
l'actionneur (21 à 23) est un piston hydraulique qui peut être commandé à l'électricité.

9. Dispositif de changement de vitesse selon l'une des revendications 1 à 8,
**caractérisé en ce que**
sur le pourtour extérieur du manchon coulissant (3), on prévoit une rainure (5) dans laquelle a prise l'installation de déplacement (15 à 20).

10. Dispositif de changement de vitesse selon la revendication 9,
**caractérisé en ce que**
l'installation de déplacement (15 à 20) est formée par une fourchette de boîte de vitesses (18 à 20) et par une tringle de changement de vitesse (15 à 17) qui y est reliée, la fourchette de boîte de vitesses (18 à 20) ayant prise dans la rainure (5).

11. Dispositif de changement de vitesse selon la revendication 9,
**caractérisé en ce que**
l'installation de déplacement est formée par une bielle de commande (8) et par des coulisseaux (6, 7) qui y sont reliés par articulation et qui ont prise dans la rainure (5).
